# EUROPEAN PATENT SPECIFICATION

(11) **EP 3 564 119 B1**
(45) Date of publication and mention of the grant of the patent: **17.08.2022**
(21) Application number: 16925368.9
(22) Date of filing: 27.12.2016
(51) Int. Cl.: B64C 27/08, B64C 39/02, B64C 27/20, B64C 1/30, B64C 27/41, B64C 27/10, B64C 39/00, B64C 11/48

(54) **MULTI-ROTOR UNMANNED AERIAL VEHICLE**
UNBEMANNTES LUFTFAHRZEUG MIT MEHREREN ROTOREN
VÉHICULE AÉRIEN MULTIROTOR SANS PILOTE

(43) Date of publication of application: 06.11.2019
(73) Proprietor: SZ DJI Technology Co., Ltd., Shenzhen, Guangdong 518057 (CN)
(72) Inventor: LIU, Yifen, Shenzhen Guangdong 518057 (CN)
(74) Representative: Goddar, Heinz J.
(86) International application number: PCT/CN2016/112273
(87) International publication number: WO 2018/119620

(56) References cited:
- WO-A1-2016/068383
- WO-A1-2016/068383
- CN-A- 104 590 556
- CN-A- 105 035 317
- CN-U- 204 956 909
- CN-U- 205 345 315
- CN-U- 205 345 315
- KR-B1- 101 456 035
- KR-B1- 101 589 263
- US-A1- 2013 206 915
- US-A1- 2014 061 362
- US-A1- 2015 321 755
- US-A1- 2016 340 021

## Description

### TECHNICAL FIELD

The present disclosure relates to the technical field of unmanned aerial vehicles (UAVs) and, in particular, to a multi-rotor UAV.

### BACKGROUND

Existing multi-rotor UAVs are generally configured with protective covers on their rotors. Due to the relatively large volume of the protective cover, a multi-rotor UAV may be inconvenient to carry.

At present, a small number of quadrotor UAVs are designed in a foldable form and are more convenient for a user to carry. However, only the two side rotors are foldable in existing quadrotor UAVs. Therefore, although it is more convenient to carry these UAVs compared to the non-foldable ones, the problem of the large size of the UAV is still unsolved.

KR 101 589 263 B1 discloses an unmanned aerial vehicle having a propeller unfolding function comprising: a main body part; multiple propeller parts in which propellers are installed; a locking unit which locks the propeller parts to maintain the state of the propeller parts arranged on the main body part to be overlapped; and an unfolding part which connects each propeller part to the main body part and unfolds the propeller part to the surroundings of the main body part when the locking of the locking unit is released. Therefore, the present invention reduces the volume and weight thereof compared with existing technology.

US 2014/061362 A1 discloses a combination rotor and a wheel assembly for an unmanned vehicle with ground and aerial mobility that has a rotor arm adapted to be attached at an inner end thereof to a vehicle body. A rotor is rotatably connected to an outer end of the rotor arm about a rotor axis, and a rotor drive mounted on the rotor arm rotates the rotor such that the rotor exerts an upward lift force on the rotor arm. An open spoked wheel is rotatably connected about the rotor axis independent of the rotor. The diameter of the wheel is greater than that of the rotor, and a bottom edge of the wheel is below the rotor. A wheel drive rotates the wheel. Vehicles can have various numbers and orientations of the rotor and wheel assembly to provide aerial and ground mobility.

KR 101 456 035 B1 relates to a rotor arm device of a multi-rotor type unmanned aircraft which provides an arm fixing member between upper and lower plates of an airframe to fold rotor arms unfolded in all directions of the airframe toward a lower portion of the airframe to reduce the storage width, provides an arm connecting member rotated with respect to the arm fixing member in the rotor arm, and provides a means for transferring the lift force generated during wing rotation to the airframe through the rotor arms in the arm connecting member and the aim fixing member, such that the aircraft can be flown without shaking of the airframe while the rotor arms are unfolded.

CN 205 345 315 U provides a novel folding unmanned aerial vehicle, which includes a fuselage body, two wings, at least one propeller group, and a number of drive motors consistent with the number of the propellers. The two wings are provided on the fuselage body through a hinge structure and is located on both sides of the fuselage body; the number of motors is equally arranged on the two wing frames; the propeller group has two sets of propellers, including a forward propeller and an inverse propeller; the two sets of propellers are respectively set on the two wing frames for driving the motor. Through the above structure, both the wing frame and the landing gear can be stowed, so that the volume of the entire drone can be effectively reduced, and the carrying is more convenient. Moreover, the disassembly and assembly structure on the utility model is simple, the operation is convenient, and the overall structure stability is good.

WO 2016/068383 A1 discloses an unmanned flying object. The unmanned flying object is provided with a base unit, a first actuator, and a propeller which rotates by means of the power of the first actuator, and the present invention comprises: a propulsion unit which is rotatably installed on the outside of the base unit; a rotation plate which is rotatably installed on one surface of the base unit; and a connection arm which connects the rotation plate and the propulsion unit.

US 2013/0206915 A1 discloses a vertical take-off and landing gyropendular craft or drone device able to move around in the following different physical environments: in the air, on land, at sea, underwater or in outer space, comprising upper and lower propulsion units, equipped with an annular fairing accommodating a certain number of electronically slaved wing or gas-powered drive or propulsion units situated in the continuation of the axis of this device, mounted on 3-D ball-joints at the ends of a certain number of telescopic rods, for example set at 120° apart at the periphery of the platform and orientable about the three axis according to the plane of flight of the multimodal multi-environment craft, a vertebral structure by way of a 3-D articulated central body of solid or hollow cylindrical shape for forming a stabilized function of stabilizing, maintaining the position and heading, and of an inertial rotary disc platform equipped underneath with a cabin of hemispherical shape extending from the vertebral structure,

accommodating a payload or a useful application, designed for various fields of application i.e. the sector of defence or civil security, so as to perform functions of search and rescue, exploration, navigation, transport, surveillance and telecommunications infrastructure deployment in free space.

### SUMMARY

The present invention is defined by independent claim 1 defining a multi-rotor UAV. Embodiments of the claimed invention are defined by the dependent claims.

According to an embodiment of the present disclosure, a multi-rotor UAV according to claim 1 is provided.

In the multi-rotor UAV provided by the present disclosure, by movably connecting the rotor mechanisms to the fuselage through the connection mechanisms, the plurality of rotor mechanisms can be overlapped with each other to form a rotor mechanism assembly after they have been rotated with respect to the corresponding connection mechanisms. Thus, the multi-rotor UAV is foldable and portable. Further, since the plurality of rotor mechanisms overlap with each other to form a rotor mechanism assembly, the volume of the multi-rotor UAV is significantly reduced.

### BRIEF DESCRIPTION OF THE DRAWINGS

In order to more clearly illustrate the technical solutions in the embodiments of the present disclosure, the drawings used in the description of the embodiments will be briefly described below. It is obvious that the drawings in the following description are only some examples of the present disclosure. Other drawings may be obtained by those of ordinary skill in the art based on these drawings.
FIG. 1 is a perspective view of a hexrotor UAV;
FIG. 2 is a projection view of the fuselage of the hexrotor UAV shown in FIG. 1;
FIG. 3 is a projection view of the hexrotor UAV shown in FIG. 1 after being folded;
FIGs. 4-6 illustrate a folding process of the hexrotor UAV shown in FIG. 1;
FIG. 7 is a perspective view of a quadrotor UAV;
FIGs. 8 and 9 illustrate a folding process of the quadrotor UAV shown in FIG. 7;
FIG. 10 is a perspective view of a trirotor UAV according to an embodiment of the present disclosure;
FIG. 11 is a projection view of the fuselage of the trirotor UAV shown in FIG. 10;
FIG. 12 is a projection view of the trirotor UAV shown in FIG. 10 after being folded; and
FIGs. 13 to 15 illustrate a folding process of the trirotor UAV shown in FIG. 10.

### DETAILED DESCRIPTION

The technical solutions according to the embodiments of the present disclosure are described in the following with reference to the accompanying drawings. It is obvious that the described embodiments are only part of the embodiments of the present disclosure, as defined by the appended claims, but not all the embodiments.

Exemplary embodiments will be described in detail herein. Their examples are illustrated in the accompanying drawings. In the following description, unless otherwise indicated, same or similar referral numerals refer to the same or similar elements in different drawings. The implementation manners described in the following exemplary embodiments do not represent all embodiments consistent with the present disclosure. Instead, they are merely examples of devices and methods consistent with aspects provided by the present disclosure as detailed in the claims.

The technical terms used in the present disclosure are for the purpose of describing particular embodiments, and are not intended to limit the present disclosure. Unless otherwise clearly indicated in the context, the singular forms of "a", "said", and "the" are also meant to include plural forms. It should also be understood that the term "and/or" as used herein refers to and encompasses any and all possible combinations of one or more of the associated listed items.

The multi-rotor UAV provided by the present disclosure will be described in detail below with reference to the accompanying drawings. The features of the embodiments described below may be combined with each other as far as they fall within the scope of the appended claims.

A multi-rotor UAV according to an embodiment of the present disclosure includes a fuselage and a plurality of rotor mechanisms disposed on the fuselage. Each rotor mechanism includes a rotor. The multi-rotor UAV further includes a plurality of connection mechanisms disposed on the fuselage. The number of the connection mechanisms has a one-to-one correspondence with the number of the rotor mechanisms. Each rotor mechanism is movably coupled to the fuselage through a corresponding connection mechanism. The plurality of rotor mechanisms are rotated with respect to the corresponding connection mechanisms, and can be overlapped with each other to form a rotor mechanism assembly.

In the multi-rotor UAV provided by the present disclosure, the rotor mechanism is movably connected to the fuselage through a connection mechanism. After the plurality of rotor mechanisms have been rotated with respect to the corresponding connection mechanisms, the rotor mechanisms overlap with each other to form a rotor mechanism assembly, thereby making the multi-rotor foldable and portable. Further, since the plurality of rotor mechanisms are overlapped with each other to form a rotor mechanism assembly, the volume of the multi-rotor UAV is significantly reduced.

The connection mechanisms of the multi-rotor UAV may be implemented with at least in the following three implementation manners, so that the rotor mechanisms are movably connected to the connection mechanisms, and the plurality of rotor mechanisms can be rotated with respect to the corresponding connection mechanisms, and can be overlapped with each other to form the rotor mechanism assembly.

In the first implementation manner which is not covered by the scope as literally claimed, the rotor mechanism may be rotated with respect to the fuselage with a fixed angle through the connection mechanism, so that the plurality of rotor mechanisms are rotated with respect to the corresponding connection mechanisms in a preconfigured order to achieve foldability, and being overlapped with each other to form the rotor mechanism assembly.

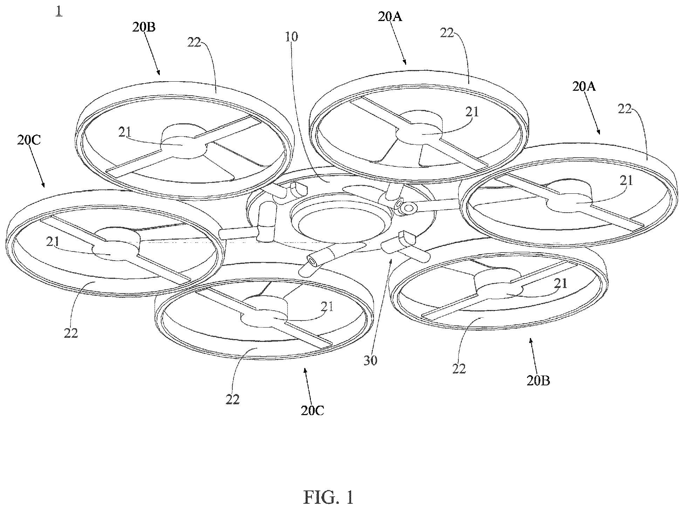

Referring to FIGs. 1-9, in the first implementation manner which is not covered by the scope as literally claimed, a multi-rotor UAV 1 provided by the present disclosure includes a fuselage 10 and a plurality of rotor mechanisms 20 disposed on the fuselage 10. The plurality of rotor mechanisms 20 may include mechanisms 20A, 20B, 20C, 20D, and 20E as shown in the drawings. Each rotor mechanism 20 includes a rotor 21. The multi-rotor UAV 1 further includes a plurality of connection mechanisms 30 disposed on the fuselage 10. The number of the connection mechanisms 30 has a one-to-one correspondence with the number of the rotor mechanisms 20. Each rotor mechanism 20 is movably connected to the fuselage 10 through a corresponding connection mechanism 30. The plurality of rotor mechanisms 20 are rotated with respect to the corresponding connection mechanisms 30, and can be overlapped with each other to form the rotor mechanism assembly 2.

In an embodiment of the present disclosure, each rotor mechanism 20 includes a protective cover 22 disposed outside the rotor 21. The plurality of rotor mechanisms 20 overlap with each other to form a concentric rotor mechanism assembly 2. Optionally, the protective cover 22 is a circular structure, and the rotor mechanism assembly 2 is a cylindrical structure.

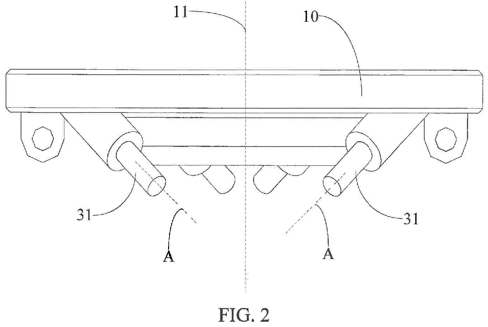

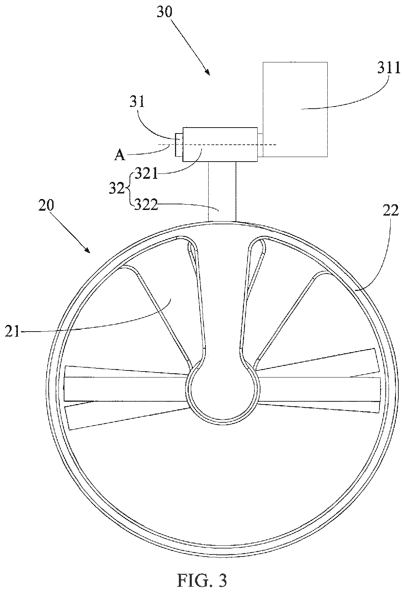

In an example which does not fall under the scope as literally claimed, as shown in FIGs. 2 and 3, the connection mechanism 30 includes a first connection assembly movably coupled to the fuselage 10. The first connection assembly is connected to the rotor mechanism 20 and may be rotated about a first axial line A. The first axial line A is inclined at a preconfigured angle from a yaw axis 11 of the multi-rotor UAV 1. Optionally, the first connection assembly includes a first rotating shaft 31 fixed to the fuselage 10 along the first axial line A and a first connection base 32 pivotally connected to the first rotating shaft 31. The first connection base 32 is coupled to the rotor mechanism 20. Optionally, the first connection base 32 includes a connection base body 321 pivotally connected to the first rotating shaft 31 and a connection member 322 pivotally connected to the connection base body 321 along an axis perpendicular to the first axial line A. The connection member 322 is coupled to the rotor mechanism 20.

In an example which does not fall under the scope as literally claimed, the number of the rotor mechanisms 20 is an even number. After each rotor mechanisms 20 has been rotated with respect to its corresponding connection mechanism 30, they together form a rotor mechanism assembly 2. Optionally, the even number of the rotor mechanisms 20 constitute a plurality of rotor mechanism sets, each rotor mechanism set including two rotor mechanisms 20. The two rotor mechanisms 20 of the rotor mechanism set are symmetrically arranged on the two sides of the fuselage 10 after having been rotated with respect to their corresponding connection mechanisms 30.

In the example shown in FIGS. 1-6, the multi-rotor UAV 1 is a hexrotor UAV. As shown in FIG. 1, two rotor mechanisms 20A constitute a first rotor mechanism set. Two rotor mechanisms 20B constitute a second rotor mechanism set. And two rotor mechanisms 20C constitute a third rotor mechanism set. A preconfigured angle formed between an axial line of the first rotating shaft 31 of the connection mechanism 30 corresponding to each of the two rotor mechanisms 20B in the second rotor mechanism set and the yaw axis 11 of the multi-rotor UAV 1 is 90°. A preconfigured angle formed between the axial line of the first rotating shaft 31 of the connection mechanism 30 corresponding to each of the four rotor mechanisms 20A and 20C of the other rotor mechanism sets and the yaw axis 11 of the multi-rotor UAV 1 is an acute angle. Optionally, the preconfigured acute angle range from 35° to 85°.

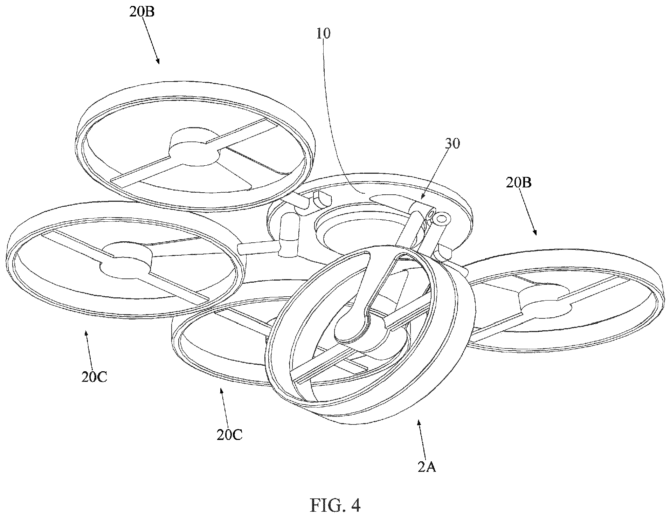

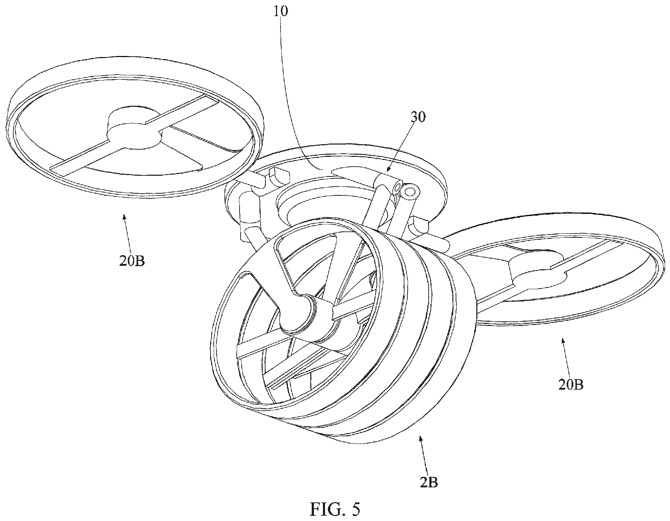

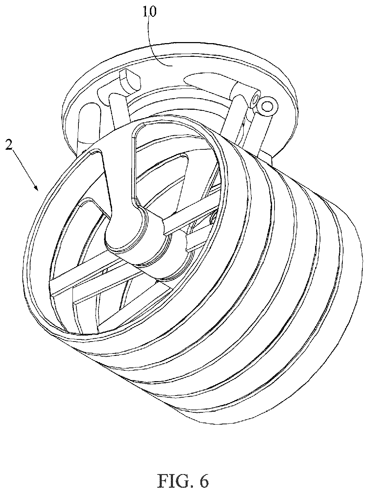

When the hexrotor UAV is being folded, first, the first connection base 32 of the connection mechanism 30 corresponding to each of the two rotor mechanisms 20A of the first rotor mechanism set is rotated about the first axial line A with respect to the first rotating shaft 31, thereby driving the two rotor mechanisms 20A of the first rotor mechanism set to rotate and overlap with each other to form a first rotor mechanism assembly 2A, as shown in FIG. 4. Next, the first connection base 32 of the connection mechanism 30 corresponding to each of the two rotor mechanisms 20C of the third rotor mechanism set is rotated about the first axial line A with respect to the first rotating shaft 31, thereby driving the two rotor mechanisms 20C of the third rotor mechanism set to rotate and overlap with the first rotor mechanism assembly 2A to form a second rotor mechanism assembly 2B, as shown in FIG. 5. Finally, the first connection base 32 of the connection mechanism 30 corresponding to each of the two rotor mechanisms 20B of the second rotor mechanism set is rotated with respect to the first rotating shaft 31 about the first axial line A, thereby driving the two rotor mechanisms 20B of the second rotor mechanism set to rotate and overlap with the second rotor mechanism assembly 2B to form a rotor mechanism assembly 2, and completing the folding of the hexrotor UAV, as shown in FIG. 6.

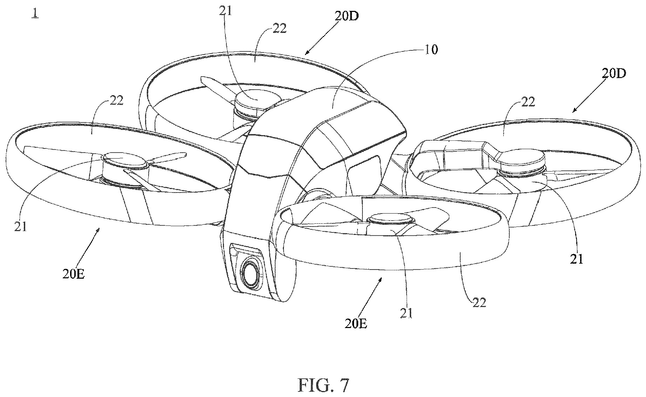

In the example shown in FIGs. 7-9, the multi-rotor UAV 1 is a quadrotor UAV. As shown in FIG. 7, two rotor mechanisms 20D form a first rotor mechanism set and two rotor mechanisms 20E form a second rotor mechanism set. A preconfigured angle formed between the axial line of the first rotating shaft 31 of the connection mechanism 30 corresponding to each of the four rotor mechanisms 20D and 20E and the yaw axis 11 of the multi-rotor UAV 1 is an acute angle. Optionally, the preconfigured angles range from 35° to 85°.

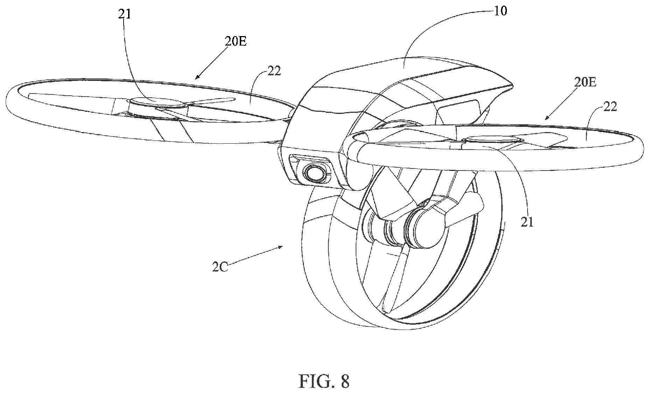

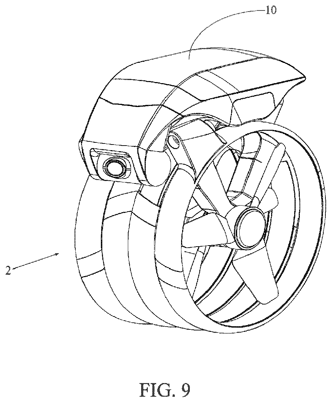

When the quadrotor UAV is being folded, first, the first connection base 32 of the connection mechanism 30 corresponding to each of the two rotor mechanisms 20D of the first rotor mechanism set is rotated about the first axial line A with respect to first rotating shaft 31, thereby driving the two rotor mechanisms 20D of the second rotor mechanism set to rotate and overlap with each other to form a third rotor mechanism assembly 2C, as shown in FIG. 8. Next, the first connection base 32 of the connection mechanism 30 corresponding to each of the two rotor mechanisms 20E of the second rotor mechanism set is rotated with respect to the first rotating shaft 31 about the first axial line A, thereby driving the two rotor mechanisms 20E of the second rotor mechanism set to rotate and overlap with the third rotor mechanism assembly 2C to form a rotor mechanism assembly 2, and completing the folding of the quadrotor UAV, as shown in FIG. 9.

In another example provided by the present disclosure, the multi-rotor UAV is a bi-rotor UAV. A preconfigured angle formed between the axial line of the first rotating shaft of the connection mechanism corresponding to each of the two rotor mechanisms and the yaw axis of the multi-rotor UAV is 90°. When the bi-rotor UAV is being folded, the first connection base of the connection mechanism corresponding to each of the two rotor mechanisms is directly rotated about the first axial line with respect to the first rotating shaft, thereby driving the two rotor mechanisms to rotate and overlap with each other to form a rotor mechanism assembly, and completing the folding of the bi-rotor UAV.

In the second implementation manner, the rotor mechanism can be rotated with a fixed inclination angle through the connection mechanism, and can be rotated with respect to the connection mechanism, so that the plurality of rotor mechanisms are rotated with respect to the corresponding connection mechanisms in a preconfigured order to achieve foldability of the multi-rotor UAV, and be overlapped with each other to form a rotor mechanism assembly.

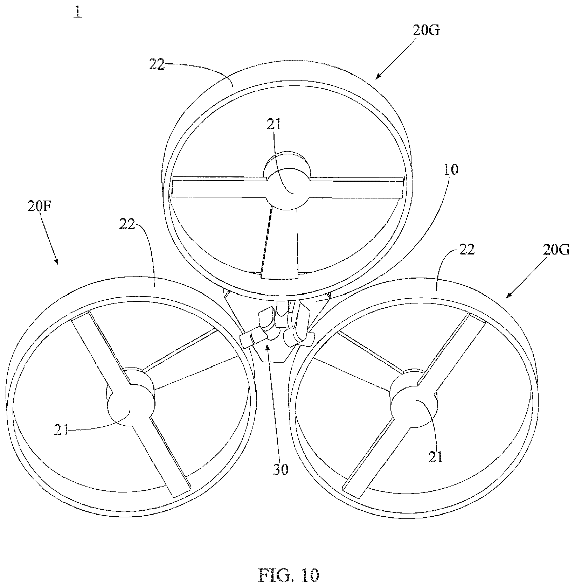

Referring to FIGs. 10-15, in the second implementation manner, a multi-rotor UAV 1 provided by the present disclosure includes a fuselage 10 and a plurality of rotor mechanisms 20 disposed on the fuselage 10. The plurality of rotor mechanisms 20 may include rotor mechanisms 20F and 20G as shown in the drawings. Each of the rotor mechanisms 20 includes a rotor 21. The multi-rotor UAV further includes a plurality of connection mechanisms 30 disposed on the fuselage 10. The number of the connection mechanisms 30 has a one-to-one correspondence with the number of the rotor mechanisms 20. Each rotor mechanism 20 is movably coupled to the fuselage 10 through its corresponding connection mechanism 30. The plurality of rotor mechanisms 20 are rotated with respect to the corresponding connection mechanisms 30, and can be overlapped with each other to form a rotor mechanism assembly 2.

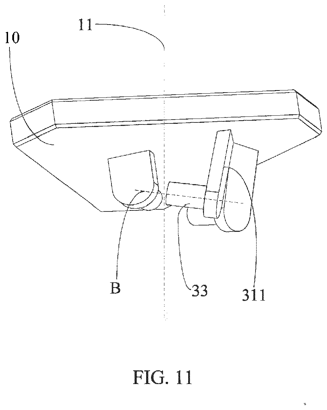

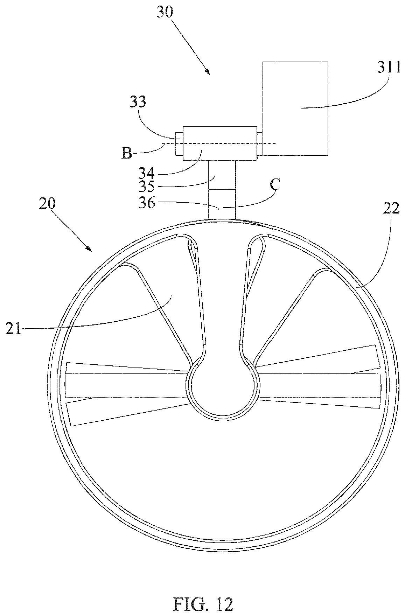

In an embodiment of the present disclosure, as shown in FIG. 11 and FIG. 12, the connection mechanism 30 includes a second connection assembly movably coupled to the fuselage 10 and a third connection assembly movably coupled to the second connection assembly. The second connection assembly is rotatable about a second axial line B. The second axial line is inclined at a preconfigured angle with respect to the yaw axis 11 of the multi-rotor UAV 1. The third connection assembly is coupled to the rotor mechanism 20 and is rotatable along a third axial line C.

Optionally, the second connection assembly includes a second rotating shaft 33 fixed to the fuselage 10 along the second axial line B and a second connection base 34 pivotally connected to the second rotating shaft 33. The third connection assembly includes a first connection body 35 fixed to the second connection base 34 and a second connection body 36 movably connected to the first connection body 35 along the third axial line C. The second connection body 36 is coupled to the rotor mechanism 20 and is rotatable with respect to the first connection body 35 along the third axial line C. Further, the second axial line B is perpendicular to the third axial line C.

In an embodiment of the present disclosure, the number of the rotor mechanisms 20 is an odd number, and the plurality of rotor mechanisms 20 include a main rotor mechanism and an even number of auxiliary rotor mechanisms. The main rotor mechanism and the even number of the auxiliary rotor mechanisms are rotated with respect to the corresponding connection mechanisms 30 to form a rotor mechanism assembly 2 together. Optionally, after the even number of the auxiliary rotor mechanisms are rotated with respect to the corresponding connection mechanisms 30, they are symmetrically disposed on two sides of the main rotor mechanism, forming the rotor mechanism assembly 2 with the main rotor mechanism.

In the example shown in FIGs. 10-15, the multi-rotor UAV 1 is a trirotor UAV. As shown in FIG. 10, the rotor mechanism 20F is a main rotor mechanism, and the two rotor mechanisms 20G are auxiliary rotor mechanisms. A preconfigured angle formed between the axial line of the second rotating shaft 33 of the connection mechanism 30 corresponding to the main rotor mechanism 20F and the yaw axis 11 of the multi-rotor UAV 1 is 90°. A preconfigured angle formed between the axial line of the second rotating shaft 33 of the connection mechanism 30 corresponding to each of the two auxiliary rotor mechanisms 20G and the yaw axis 11 of the multi-rotor UAV 1 is an acute angle. Optionally, the preconfigured acute angle ranges from 35° to 85°.

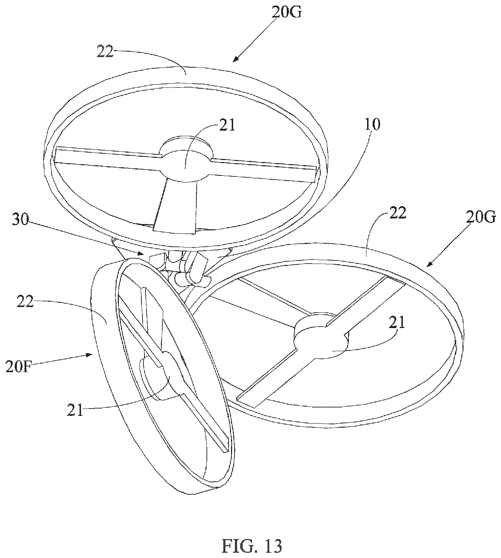

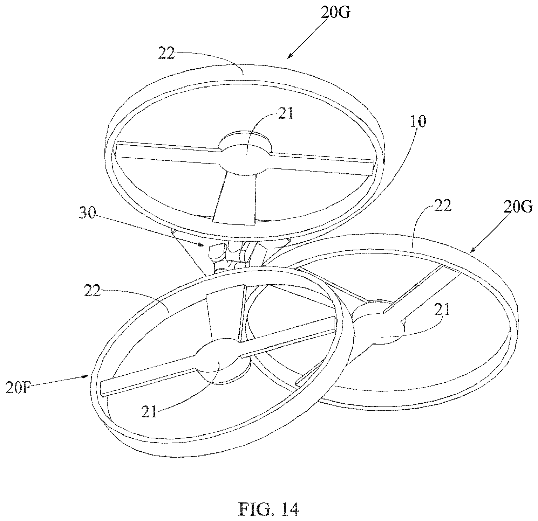

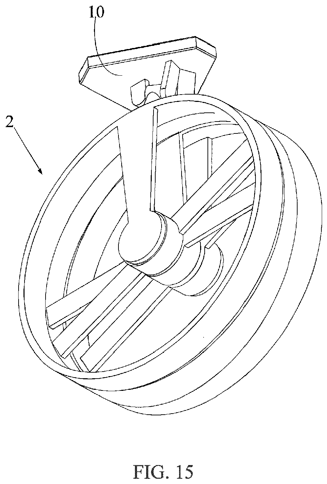

When the trirotor UAV is being folded, first, the second connection base 34 of the connection mechanism 30 corresponding to the main rotor mechanism 20F is rotated about the second axial line B with respect to the second rotating shaft 33, thereby driving the main rotor mechanism 20F to be rotated to a position as shown in FIG. 13. Next, the second connection body 36 of the connection mechanism 30 corresponding to the main rotor mechanism 20F is rotated about the third axial line C with respect to the first connection body 35, thereby driving the main rotor mechanism 20F to rotate 90° as shown in FIG. 14. Finally, the second connection base 34 of the connection mechanism 30 corresponding to each of the two auxiliary rotor mechanisms 20G is rotated about the second axial line B with respect to the second rotating shaft 33, thereby driving the two auxiliary rotor mechanisms 20G to rotate and overlap with the main rotor mechanism 20F to form the rotor mechanism assembly 2, and completing the folding of the trirotor UAV, as shown in FIG. 15.

In an embodiment of the present disclosure, the even number of the auxiliary rotor mechanisms constitute a plurality of auxiliary rotor mechanism sets, each auxiliary rotor mechanism set including two auxiliary rotor mechanisms. The two auxiliary rotor mechanisms of the auxiliary rotor mechanism set are symmetrically arranged on two sides of the main rotor mechanism after being rotated with respect to the corresponding connection mechanisms.

In another example provided by the present disclosure, the multi-rotor UAV is a pentarotor UAV. The axial line of the second rotating shaft of the connection mechanism corresponding to each of the two auxiliary rotor mechanisms of the first auxiliary rotor mechanism set is inclined at a first preconfigured angle with respect to the yaw axis of the multi-rotor UAV. The axial line of the second rotating shaft of the connection mechanism corresponding to each of the two auxiliary rotor mechanisms of the second auxiliary rotor mechanism set is inclined at a second preconfigured angle with respect to the yaw axis of the multi-rotor UAV.

The preconfigured angle formed between the axial line of the second rotating shaft of the connection mechanism corresponding to the main rotor mechanism and the yaw axis of the multi-rotor UAV is 90°. The first preconfigured angle formed between the axial line of the second rotating shaft of the connection mechanism corresponding to each of the two auxiliary rotor mechanisms of the first auxiliary rotor mechanism set and the yaw axis of the multi-rotor UAV is an acute angle. The second preconfigured angle formed between the axial line of the second rotating shaft of the connection mechanism corresponding to each of the two auxiliary rotor mechanisms of the second auxiliary rotor mechanism set and the yaw axis of the multi-rotor UAV is an acute angle. Optionally, the first preconfigured angle is in the range of 35° to 85°, or/and the second preconfigured angle is in the range of 35° to 85°.

When the pentarotor UAV is being folded, first, the second connection base of the connection mechanism corresponding to the main rotor mechanism is rotated about the second axial line with respect to the second rotating shaft, thereby driving the main rotor mechanism to rotate. Next, the second connection body of the connection mechanism corresponding to the main rotor mechanism is rotated about the third axial line with respect to the first connection body, thereby driving the main rotor mechanism to rotate 90°. Finally, the second connection base of the connection mechanism corresponding to the two auxiliary rotor mechanisms of the plurality of auxiliary rotor mechanism sets are sequentially rotated about the second axial line with respect to the second axial line, thereby driving the two auxiliary rotor mechanisms to rotate and overlap with the main rotor mechanism to form the rotor mechanism assembly, and completing the folding of the pentarotor UAV.

In a third implementation manner which is not covered by the scope as literally claimed, the connection mechanism includes a rotation mechanism disposed on the fuselage. The rotation mechanism is coupled to the rotor mechanism for driving the rotor mechanism to rotate. Optionally, the rotation mechanism is a universal joint mechanism. That is to say, the rotation mechanism drives the rotor mechanism to rotate at an arbitrary angle, so that the plurality of rotor mechanisms are rotated in a preconfigured order and overlap with each other to form a rotor mechanism assembly.

In the third implementation manner which is not covered by the scope as literally claimed, the multi-rotor UAV provided by the present disclosure includes a fuselage and a plurality of rotor mechanisms disposed on the fuselage. Each of the rotor mechanisms includes a rotor. The multi-rotor UAV further includes a plurality of connection mechanisms disposed on the fuselage. The number of the connection mechanisms has a one-to-one correspondence with the number of the rotor mechanisms. Each of the connection mechanisms includes a rotation mechanism disposed on the fuselage. Correspondingly, the number of the rotation mechanisms also has a one-to-one correspondence with the number of the rotor mechanisms. Each rotor mechanism is movably coupled to the fuselage through a corresponding rotation mechanism. The plurality of rotor mechanisms are driven by their corresponding rotation mechanisms to rotate, and to overlap with each other to form a rotor mechanism assembly.

Thus, the multi-rotor UAV provided by the present disclosure movably connects the rotor mechanism to the fuselage through a connection mechanism, so that after the plurality of rotor mechanisms are rotated with respect to the corresponding connection mechanisms, the rotor mechanisms can be overlapped with each other to form a rotor mechanism assembly. The multi-rotor UAV can be folded to be portable, and the plurality of rotor mechanisms overlap with each other to form a rotor mechanism assembly, which greatly reduces the volume of the multi-rotor UAV after being folded.

It should be noted that, in the present disclosure, relational terms such as "first" and "second" are used merely to distinguish one entity or operation from another entity or operation, and do not necessarily require or imply actual relationship or order between these entities or operations. The terms "comprise" , "include", or any other variations intended to cover a non-exclusive inclusion, such that a process, method, article, or device that having a plurality of elements, include not only those elements but also other items not specifically listed elements, or elements that are inherent to such a process, method, item, or device. Unless otherwise limited, an element that is defined by the phrase "comprising a..." does not exclude the presence of additional equivalent elements in the process, method, item, or device that comprises the element.

The apparatus provided by the present disclosure according to the embodiments is described in detail above. The principles and implementation manners provided by the present disclosure are described herein by using specific examples. The description of the above embodiments is only used to help understand the apparatus provided by the present disclosure. At the same time, a person skilled in the art may change the specific embodiments without departing from the scope of invention as defined in the appended claims.

## Claims

1. A multi-rotor unmanned aerial vehicle (UAV) (1), comprising:
a fuselage (10); and
a plurality of rotor mechanisms (20) disposed on the fuselage (10), each rotor mechanism (20) including a rotor (21),
wherein the multi-rotor UAV (1) further comprises a plurality of connection mechanisms (30) disposed on the fuselage (10), the number of the connection mechanisms (30) being in one-to-one correspondence with the number of the rotor mechanisms (20), and each rotor mechanism (20) being movably connected to the fuselage (10) through a corresponding connection mechanism (30);
wherein at least one of the connection mechanisms (30) comprises a second connection assembly movably coupled to the fuselage (10) and a third connection assembly movably coupled to the second connection assembly;
the second connection assembly is configured to be rotated about a second axial line (B), the second axial line being inclined at a preconfigured angle from a yaw axis (11) of the multi-rotor UAV (1); and
the third connection assembly is connected to one of said plurality of rotor mechanisms (20) and is
configured to be rotated about a third axial line (C); and
the plurality of rotor mechanisms (20) are configured to be rotated with respect to the corresponding
connection mechanisms (30), and capable of being overlapped with each other to form a rotor mechanism assembly (2);
wherein the multi-rotor UAV (1) is **characterized in that**
the plurality of rotor mechanisms (20) are configured to be overlapped with each other to form a concentric rotor mechanism assembly (2).

2. The multi-rotor UAV (1) according to claim 1,
wherein the second axial line (B) is perpendicular to the third axial line (C).

3. The multi-rotor UAV (1) according to claim 2, wherein:
the second connection assembly includes a second rotating shaft (33) fixed to the fuselage (10) along the second axial line (B) and a second connection base (34) pivotally connected to the second rotating shaft (33); and
the third connection assembly includes a first connection body (35) fixed to the second connection base (34) and a second connection body (36) movably connected to the first connection body (35) along the third axial line (C), the second connection body (36) being connected to the rotor mechanism (20) and configured to be rotated with respect to the first connection body (35) about the third axial line (C).

4. The multi-rotor UAV (1) according to claim 3, wherein:
a number of the rotor mechanisms (20) is an odd number;
the plurality of rotor mechanisms (20) include a main rotor mechanism (20F) and an even number of auxiliary rotor mechanisms (20G); and
the main rotor mechanism (20F) and the auxiliary rotor mechanisms (20G) are configured to be rotated with respect to their corresponding connection mechanisms (30) to form the rotor mechanism assembly (2).

5. The multi-rotor UAV (1) according to claim 4, wherein:
after the even number of auxiliary rotor mechanisms (20G) are rotated with respect to their corresponding connection mechanisms (30), they are symmetrically arranged on two sides of the main rotor mechanism (20F), and form the rotor mechanism assembly (2) with the main rotor mechanism (20F),
wherein preferably:
the multi-rotor UAV (1) is a trirotor UAV;
a preconfigured angle formed between the axial line of the second rotating shaft (33) of the connection mechanism (30) of the main rotor mechanism (20F) and the yaw axis (11) of the multi-rotor UAV (1) is 90°; and
a preconfigured angle formed between the axial line of the second rotating shaft (33) of the connection mechanism (30) corresponding to each of the two auxiliary rotor mechanisms (20G) and the yaw axis (11) of the multi-rotor UAV (1) is an acute angle, wherein the preconfigured angle is preferably in the range of 35° to 85°.

6. The multi-rotor UAV (1) according to claim 4, wherein:
the even number of auxiliary rotor mechanisms (20G) constitute a plurality of auxiliary rotor mechanism sets, each auxiliary rotor mechanism set including two of the plurality of auxiliary rotor mechanisms (20G); and
the two auxiliary rotor mechanisms (20G) of the auxiliary rotor mechanism set are symmetrically arranged on two sides of the main rotor mechanism (20F) after being rotated with respect to their corresponding connection mechanisms (30),
wherein preferably:
the multi-rotor UAV (1) is a pentarotor UAV; the connection mechanisms (30) connected to each of the auxiliary rotor mechanisms (20G) each comprise the second connection assembly and the third connection assembly;
the axial line of the second rotating shaft (33) of the connection mechanism (30) corresponding to each of the two auxiliary rotor mechanisms (20G) of the first auxiliary rotor mechanism set is inclined at a first preconfigured angle with respect to the yaw axis (11) of the multi-rotor UAV (1);
the axial line of the second rotating shaft (33) of the connection mechanism (30) corresponding to each of the two auxiliary rotor mechanisms (20G) of a second auxiliary rotor mechanism set is inclined at a second preconfigured angle with respect to the yaw axis (11) of the multi-rotor UAV (1);
a preconfigured angle formed between the axial line of the second rotating shaft (33) of the connection mechanism (30) corresponding to the main rotor mechanism (20F) and the yaw axis (11) of the multi-rotor UAV (1) is 90°;
the first preconfigured angle formed between the axial line of the second rotating shaft (33) of the connection mechanism (30) corresponding to each of the two auxiliary rotor mechanisms (20G) of the first auxiliary rotor mechanism set and the yaw axis (11) of the multi-rotor UAV (1) is an acute angle; and
the second preconfigured angle formed between the axial line of the second rotating shaft (33) of the connection mechanism (30) corresponding to each of the two auxiliary rotor mechanisms (20G) of the second auxiliary rotor mechanism set and the yaw axis (11) of the multi-rotor UAV (1) is an acute angle,
wherein further preferably:
the first preconfigured angle is in the range of 35° to 85°, and/or the second preconfigured angle is in the range of 35° to 85°.

7. The multi-rotor UAV (1) according to claim 1, wherein the rotor mechanism (20) further comprises a protective cover (22) disposed outside the rotor (21).

8. The multi-rotor UAV (1) according to claim 7, wherein
the protective cover (22) is a circular structure; and
the rotor mechanism assembly (2) is a cylindrical structure.

## Patentansprüche

1. Unbemanntes Luftfahrzeug (UAV) (1) mit mehreren Rotoren, das Folgendes umfasst:
einen Rumpf (10) und
eine Vielzahl von Rotormechanismen (20), die auf dem Rumpf (10) angeordnet sind, wobei jeder Rotormechanismus (20) einen Rotor (21) beinhaltet;
wobei das UAV (1) mit mehreren Rotoren ferner eine Vielzahl von Verbindungsmechanismen (30) umfasst, die auf dem Rumpf (10) angeordnet sind, wobei die Anzahl der Verbindungsmechanismen (30) eine Eins-zu-eins-Entsprechung mit der Anzahl der Rotormechanismen (20) aufweist und wobei jeder Rotormechanismus (20) über einen entsprechenden Verbindungsmechanismus (30) bewegbar mit dem Rumpf (10) verbunden ist;
wobei
mindestens einer der Verbindungsmechanismen (30) eine zweite Verbindungsanordnung, die bewegbar an den Rumpf (10) gekoppelt ist, und eine dritte Verbindungsanordnung, die bewegbar an die zweite Verbindungsanordnung gekoppelt ist, umfasst;
die zweite Verbindungsanordnung dazu ausgelegt ist, um eine zweite Axiallinie (B) gedreht zu werden, wobei die zweite Axiallinie in einem vorausgelegten Winkel von einer Gierachse (11) des UAV (1) mit mehreren Rotoren geneigt ist; und
die dritte Verbindungsanordnung mit einem der Vielzahl von Rotormechanismen verbunden und dazu ausgelegt ist, um eine dritte Axiallinie (C) gedreht zu werden; und
die Vielzahl von Rotormechanismen (20) dazu ausgelegt sind, mit Bezug auf die entsprechenden Verbindungsmechanismen (30) gedreht zu werden, und in der Lage sind, einander zu überlappen, um eine Rotormechanismusanordnung (2) zu bilden;
wobei das UAV (1) mit mehreren Rotoren **dadurch gekennzeichnet ist, dass** die Vielzahl von Rotormechanismen (20) dazu ausgelegt sind, einander zu überlappen, um eine konzentrische Rotormechanismusanordnung (2) zu bilden.

2. UAV (1) mit mehreren Rotoren nach Anspruch 1,
wobei die zweite Axiallinie (B) senkrecht zur dritten Axiallinie (C) verläuft.

3. UAV (1) mit mehreren Rotoren nach Anspruch 2, wobei:
die zweite Verbindungsanordnung eine zweite Drehwelle (33), die entlang der zweiten Axiallinie (B) am Rumpf (10) befestigt ist, und eine zweite Verbindungsbasis (34), die schwenkbar mit der zweiten Drehwelle (33) verbunden ist, beinhaltet und
die dritte Verbindungsanordnung einen ersten Verbindungskörper (35), der an der zweiten Verbindungsbasis (34) befestigt ist, und einen zweiten Verbindungskörper (36), der entlang der dritten Axiallinie (C) bewegbar mit dem ersten Verbindungskörper (35) verbunden ist, wobei der zweite Verbindungskörper (36) mit dem Rotormechanismus (20) verbunden und dazu ausgelegt ist, mit Bezug auf den ersten Verbindungskörper (35) um die dritte Axiallinie (C) gedreht zu werden.

4. UAV (1) mit mehreren Rotoren nach Anspruch 3, wobei:
eine Anzahl der Rotormechanismen (20) eine ungerade Anzahl ist;
die Vielzahl von Rotormechanismen (20) einen Hauptrotormechanismus (20F) und eine gerade Anzahl von Zusatzrotormechanismen (20G) beinhalten und
der Hauptrotormechanismus (20F) und die Zusatzrotormechanismen (20G) dazu ausgelegt sind, mit Bezug auf deren entsprechende Verbindungsmechanismen (30) gedreht zu werden, um die Rotormechanismusanordnung (2) zu bilden.

5. UAV (1) mit mehreren Rotoren nach Anspruch 4, wobei:
nachdem die gerade Anzahl von Zusatzrotormechanismen (20G) mit Bezug auf deren entsprechende Verbindungsmechanismen (30) gedreht wurden, sie auf zwei Seiten des Hauptrotormechanismus (20F) symmetrisch angebracht sind und mit dem Hauptrotormechanismus (20F) die Rotormechanismusanordnung (2) bilden,
wobei vorzugsweise:
das UAV (1) mit mehreren Rotoren ein UAV mit drei Rotoren ist;
ein vorausgelegter Winkel, der zwischen der Axiallinie der zweiten Drehwelle (33) des Verbindungsmechanismus (30) des Hauptrotormechanismus (20F) und der Gierachse (11) des UAV (1) mit mehreren Rotoren gebildet ist, 90° beträgt und
ein vorausgelegter Winkel, der zwischen der Axiallinie der zweiten Drehwelle (33) des Verbindungsmechanismus (30), der jedem der zwei Zusatzrotormechanismen (20G) entspricht, und der Gierachse (11) des UAV (1) mit mehreren Rotoren gebildet ist, ein spitzer Winkel ist, wobei der vorausgelegte Winkel vorzugsweise im Bereich von 35° bis 85° beträgt.

6. UAV (1) mit mehreren Rotoren nach Anspruch 4, wobei:
die gerade Anzahl von Zusatzrotormechanismen (20G) eine Vielzahl von Zusatzrotormechanismussätzen konstituieren, wobei jeder Zusatzrotormechanismussatz zwei der Vielzahl von Zusatzrotormechanismen (20G) beinhaltet; und
die zwei Zusatzrotormechanismen (20G) des Zusatzrotormechanismussatzes auf zwei Seiten des Hauptrotormechanismus (20F) symmetrisch angebracht sind,
nachdem sie mit Bezug auf deren entsprechende Verbindungsmechanismen (30) gedreht wurden, wobei vorzugsweise:
das UAV (1) mit mehreren Rotoren ein UAV mit fünf Rotoren ist;
die Verbindungsmechanismen (30), die mit jedem der Zusatzrotormechanismen (20G) verbunden sind, jeweils die zweite Verbindungsanordnung und die dritte Verbindungsanordnung umfassen;
die Axiallinie der zweiten Drehwelle (33) des Verbindungsmechanismus (30), der jedem der zwei Zusatzrotormechanismen (20G) des ersten Zusatzrotormechanismussatzes entspricht, mit Bezug auf die Gierachse (11) des UAV (1) mit mehreren Rotoren in einem ersten vorausgelegten Winkel geneigt ist;
die Axiallinie der zweiten Drehwelle (33) des Verbindungsmechanismus (30), der jedem der zwei Zusatzrotormechanismen (20G) eines zweiten Zusatzrotormechanismussatzes entspricht, mit Bezug auf die Gierachse (11) des UAV (1) mit mehreren Rotoren in einem zweiten vorausgelegten Winkel geneigt ist;
ein vorausgelegter Winkel, der zwischen der Axiallinie der zweiten Drehwelle (33) des Verbindungsmechanismus (30), der dem Hauptrotormechanismus (20F) entspricht, und der Gierachse (11) des UAV (1) mit mehreren Rotoren gebildet ist, 90° beträgt;
der erste vorausgelegte Winkel, der zwischen der Axiallinie der zweiten Drehwelle (33) des Verbindungsmechanismus (30), der jedem der zwei Zusatzrotormechanismen (20G) des ersten Zusatzrotormechanismussatzes entspricht, und der Gierachse (11) des UAV (1) mit mehreren Rotoren ein spitzer Winkel ist und
der zweite vorausgelegte Winkel, der zwischen der Axiallinie der zweiten Drehwelle (33) des Verbindungsmechanismus (30), der jedem der zwei Zusatzrotormechanismen (20G) des zweiten Zusatzrotormechanismussatzes entspricht, und der Gierachse (11) des UAV (1) mit mehreren Rotoren ein spitzer Winkel ist, ferner wobei vorzugsweise:
der erste vorausgelegte Winkel im Bereich von 35° bis 85° liegt und/oder der zweite vorausgelegte Winkel im Bereich von 35° bis 85° liegt.

7. UAV (1) mit mehreren Rotoren nach Anspruch 1, wobei der Rotormechanismus (20) ferner eine Schutzabdeckung (22) umfasst, die außerhalb des Rotors (21) angeordnet ist.

8. UAV (1) mit mehreren Rotoren nach Anspruch 7, wobei die Schutzabdeckung (22) eine Kreisstruktur aufweist und die Rotormechanismusanordnung (2) eine Zylinderstruktur aufweist.

## Revendications

1. Véhicule aérien autonome à rotor multiples (UAV) (1), comprenant :
un fuselage (10) ; et
une pluralité de mécanismes de rotor (20) disposés sur le fuselage (10), chaque mécanisme de rotor (20) comprenant un rotor (21),
dans lequel l'UAV à rotor multiples (1) comprend en outre une pluralité de mécanismes de liaison (30) disposés sur le fuselage (10), le nombre de mécanismes de liaison (30) étant en correspondance biunivoque avec le nombre de mécanismes de rotor (20), et chaque mécanisme de rotor (20) étant relié de manière mobile au fuselage (10) par le biais d'un mécanisme de liaison correspondant (30) ;
dans lequel au moins l'un des mécanismes de liaison (30) comprend un second ensemble de liaison couplé de manière mobile au fuselage (10) et un troisième ensemble de liaison couplé de manière mobile au second ensemble de liaison ;
le second ensemble de liaison est configuré pour être pivoté autour d'une seconde ligne axiale (B), la seconde ligne axiale étant inclinée à un angle préconfiguré par rapport à un axe de lacet (11) de l'UAV à rotor multiples (1) ; et
le troisième ensemble de liaison est relié à l'un de ladite pluralité de mécanismes de rotor (20) et est configuré pour être pivoté autour d'une troisième ligne axiale (C) ; et
les mécanismes de rotor (20) sont configurés pour être pivotés par rapport aux mécanismes de liaison correspondants (30), et peuvent être chevauchés les uns avec les autres afin de former un ensemble de mécanisme de rotor (2) ;
dans lequel l'UAV à rotor multiples (1) est **caractérisé en ce que**
les mécanismes de rotor (20) sont configurés pour être chevauchés les uns avec les autres afin de former un ensemble de mécanisme de rotor concentrique (2).

2. UAV à rotor multiples (1) selon la revendication 1,
dans lequel la seconde ligne axiale (B) est perpendiculaire à la troisième ligne axiale (C).

3. UAV à rotor multiples (1) selon la revendication 2, dans lequel
le second ensemble de liaison comprend un second arbre pivotant (33) fixé sur le fuselage (10) le long de la seconde ligne axiale (B) et une seconde base de liaison (34) reliée de manière pivotante au second arbre pivotant (33) ; et
le troisième ensemble de liaison comprend un premier corps de liaison (35) fixé sur la seconde base de liaison (34) et un second corps de liaison (36) relié de manière mobile au premier corps de liaison (35) le long de la troisième ligne axiale (C), le second corps de liaison (36) étant relié au mécanisme de rotor (20) et configuré pour être pivoté par rapport au premier corps de liaison (35) autour de la troisième ligne axiale (C).

4. UAV à rotor multiples (1) selon la revendication 3, dans lequel :
un nombre de mécanismes de rotor (20) est un nombre impair ;
la pluralité de mécanismes de rotor (20) comprend un mécanisme de rotor principal (20F) et un nombre pair de mécanismes de rotor auxiliaires (20G) ; et
le mécanisme de rotor principal (20F) et les mécanismes de rotor auxiliaires (20G) sont configurés pour être pivotés par rapport à leurs mécanismes de liaison correspondants (30) afin de former l'ensemble de mécanisme de rotor (2).

5. UAV à rotor multiples (1) selon la revendication 4, dans lequel :
une fois que les mécanismes de rotor auxiliaires (20G) en nombre pair ont été pivotés par rapport à leurs mécanismes de liaison correspondants (30), ils sont disposés de manière symétrique sur deux côtés du mécanisme de rotor principal (20F), et forment l'ensemble de mécanisme de rotor (2) avec le mécanisme de rotor principal (20F),
dans lequel, de préférence :
l'UAV à rotor multiples (1) est un UAV trirotor ;
un angle préconfiguré formé entre la ligne axiale du second arbre pivotant (33) du mécanisme de liaison (30) du mécanisme de rotor principal (20F) et l'axe de lacet (11) de l'UAV à rotor multiples (1) est de 90° ; et
un angle préconfiguré formé entre la ligne axiale du second arbre pivotant (33) du mécanisme de liaison (30) correspondant à chacun des deux mécanismes de rotor auxiliaires (20G) et l'axe de lacet (11) de l'UAV à rotor multiples (1) est un angle aigu, dans lequel l'angle préconfiguré est de préférence compris entre 35° et 85°.

6. UAV à rotor multiples (1) selon la revendication 4, dans lequel :
les mécanismes de rotor auxiliaires (20G) en nombre pair constituent une pluralité de groupes de mécanismes de rotor auxiliaires, chaque groupe de mécanismes de rotor auxiliaires comprenant deux de la pluralité de mécanismes de rotor auxiliaires (20G) ; et
les deux mécanismes de rotor auxiliaires (20G) du groupe de mécanismes de rotor auxiliaires sont disposés de manière symétrique sur deux côtés du mécanisme de rotor principal (20F) après avoir été pivotés par rapport à leurs mécanismes de liaison correspondants (30),
dans lequel, de préférence :
l'UAV à rotor multiples (1) est un UAV pentarotor ;
les mécanismes de liaison (30) reliés à chacun des mécanismes de rotor auxiliaires (20G) comprennent chacun le second ensemble de liaison et le troisième ensemble de liaison ;
la ligne axiale du second arbre pivotant (33) du mécanisme de liaison (30) correspondant à chacun des deux mécanismes de rotor auxiliaires (20G) du premier groupe de mécanismes de rotor auxiliaires est inclinée à un premier angle préconfiguré par rapport à l'axe de lacet (11) de l'UAV à rotor multiples (1) ;
la ligne axiale du second arbre pivotant (33) du mécanisme de liaison (30) correspondant à chacun des deux mécanismes de rotor auxiliaires (20G) d'un second groupes de mécanismes de rotor auxiliaires est inclinée à un second angle préconfiguré par rapport à l'axe de lacet (11) de l'UAV à rotor multiples (1) ;
un angle préconfiguré formé entre la ligne axiale du second arbre pivotant (33) du mécanisme de liaison (30) correspondant au mécanisme de rotor principal (20F) et l'axe de lacet (11) de l'UAV à rotor multiples (1) est de 90° ;
le premier angle préconfiguré formé entre la ligne axiale du second arbre pivotant (33) du mécanisme de liaison (30) correspondant à chacun des deux mécanismes de rotor auxiliaires (20G) du premier groupe de mécanismes de rotor auxiliaires et l'axe de lacet (11) de l'UAV à rotor multiples (1) est un angle aigu ; et
le second angle préconfiguré formé entre la ligne axiale du second arbre pivotant (33) du mécanisme de liaison (30) correspondant à chacun des deux mécanismes de rotor auxiliaires (20G) du second groupe de mécanismes de rotor auxiliaires et l'axe de lacet (11) de l'UAV à rotor multiples (1) est un angle aigu,
dans lequel, de préférence, en outre :
le premier angle préconfiguré est compris entre 35° et 85°, et/ou le second angle préconfiguré est compris entre 35° et 85°.

7. UAV à rotor multiples (1) selon la revendication 1, dans lequel le mécanisme de rotor (20) comprend en outre un capot de protection (22) disposé à l'extérieur du rotor (21).

8. UAV à rotor multiples (1) selon la revendication 7, dans lequel
le capot de protection (22) est une structure circulaire ; et
l'ensemble de mécanisme de rotor (2) est une structure cylindrique.
